(19) Europäisches Patentamt
European Patent Office
Office européen des brevets

(11) **EP 2 491 340 B1**

(12) **EUROPEAN PATENT SPECIFICATION**

(45) Date of publication and mention
of the grant of the patent:
**22.02.2017 Bulletin 2017/08**

(51) Int Cl.:
***G06T 1/00*** *(2006.01)*   ***H04N 13/02*** *(2006.01)*
***G01C 3/08*** *(2006.01)*   ***G02B 7/30*** *(2006.01)*
***G02B 27/28*** *(2006.01)*   ***G06T 7/00*** *(2017.01)*

(21) Application number: **10824998.8**

(22) Date of filing: **14.10.2010**

(86) International application number:
**PCT/JP2010/068537**

(87) International publication number:
**WO 2011/049149 (28.04.2011 Gazette 2011/17)**

(54) **RANGING CAMERA APPARATUS**

RANGIERKAMERAVORRICHTUNG

APPAREIL PHOTOGRAPHIQUE DE TÉLÉMÉTRIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2009 JP 2009239946**

(43) Date of publication of application:
**29.08.2012 Bulletin 2012/35**

(73) Proprietor: **Ricoh Company, Ltd.
Tokyo 143-8555 (JP)**

(72) Inventor: **YOKOTA, Soichiro
Tokyo 143-8555 (JP)**

(74) Representative: **Leeming, John Gerard
J A Kemp
14 South Square
Gray's Inn
London WC1R 5JJ (GB)**

(56) References cited:
EP-A2- 2 251 227    JP-A- 3 118 612
JP-A- 6 018 262    JP-A- H0 618 262
JP-A- 11 175 702    JP-A- H11 175 702

## Description

The present invention relates to ranging camera apparatuses for recognizing an object in an imaged area.

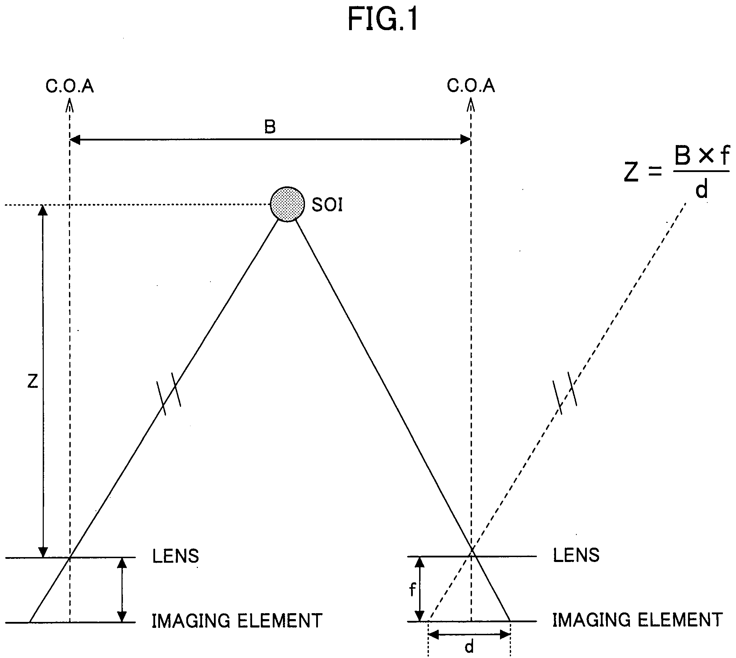

FIG. 1 illustrates the principle of triangulation adopted in a ranging camera apparatus for measuring a three-dimensional position of a subject of interest (SOI). The ranging camera apparatus measures a distance Z to the SOI according to the following equation:

$$Z=(B \times f)/d \qquad (1)$$

where B is a base-line distance between the centers of optical axes (COA) of two cameras for taking images of the SOI from two different view points, f is a focal distance between a lens and an imaging element of the cameras, and d is a distance between corresponding points of the two images taken by the cameras (parallax).

In this way, information about the three-dimensional position of the SOI can be readily calculated. The ranging camera apparatus is capable of calculating the three-dimensional position of the subject only to the extent that the subject is present in both of the images taken by the two cameras. More specifically, the ranging camera apparatus calculates the three-dimensional position by utilizing luminance information of the photographed images.

When calculating the parallax from the photographed images, the images taken by the cameras from different viewpoints are partitioned into blocks, and a matching process is carried out on the blocks in terms of luminance. The simplest and fastest one of the methods using such a block matching process is a method based on a city block distance calculation by which a correspondence degree is calculated from the sum of absolute values of corresponding pixels by the sum of absolute difference (SAD) method, as discussed in Patent Document 1.

There is a need for automatic recognition of a forward-direction situation by taking pictures of objects ahead of a motor vehicle using an onboard camera. Patent Document 2 discusses a technology that enables the recognition of a road condition or the road edges, which are difficult to recognize with the conventional luminance information alone, by utilizing polarization ratio information. The technology according to Patent Document 1 also enables three-dimensional recognition of a forward-direction situation by utilizing the parallax information. Thus, there is a need for acquiring both polarization information and parallax information simultaneously.

When it is desired to perform automatic recognition of a forward-direction situation by taking pictures of objects ahead based on an image taken by the on-board camera, and control the vehicle based on the image, real-time processing is required.

In Patent Document 1, because the parallax is calculated from the city block distance by performing the SAD method on the luminance information (brightness information), a mismatch is caused if the cameras for acquiring the luminance images do not have the same sensitivity. If there is a mismatch, the calculation of the parallax would be affected, resulting in a ranging error. In order to prevent such an error, various matching algorithms have been proposed. Some of the algorithms involve normalizing or encoding the luminance information of the images prior to matching. However, such algorithms are complicated and the processing speed may be reduced. On the other hand, from the hardware point of view, a method may be employed that would electrically control the sensitivity of the imaging elements by selecting only those imaging elements having a predetermined sensitivity, or through a calibration step. However, these methods require the selecting or adjusting step for maintaining a uniform sensitivity of the cameras, resulting in a cost increase when the ranging camera apparatuses are to be mass-produced.

When calculating the parallax by partitioning the luminance images taken by the cameras from the different viewpoints into blocks, and then performing matching on the blocks, the images in the blocks used for parallax calculation need to have a sufficient luminance difference. For example, if there is no luminance difference in the image because the image is so dark, all of the blocks would have the same characteristics, so that a mismatch can be caused. In order to avoid such a mismatch, the duration of exposure time may be extended or a gain offset process may be performed on the imaging elements so that they can take images with high sensitivity under any conditions. However, this results in an increase in cost and processing time.

When polarization ratio information alone is utilized as discussed in Patent Document 2, no depth information of the forward-direction environment is available, so that it is difficult to separate objects that appear overlapping in a two-dimensional image.

Patent Document 4 discloses a ranging camera in which a telephoto image and a wide angle image are captured simultaneously using a single image sensor by using different polarisation states to separate the two images.

Patent Document 1: JP5-265547A
Patent Document 2: JP2008-122217A
Patent Document 3: JP10-335758A

Patent Document 4: EP 2 252 227 A2

SUMMARY OF THE INVENTION

The disadvantages of the prior art may be overcome by the present invention which, in one aspect, is a ranging camera apparatus as claimed in the appended claims.

BRIEF DESCRIPTION OF THE DRAWINGS

A complete understanding of the present invention may be obtained by reference to the accompanying drawings, when considered in conjunction with the subsequent detailed description, in which:

FIG. 1 illustrates a principle of measuring a three-dimensional position of an object;
FIG. 2 illustrates a ranging camera apparatus according to an embodiment of the present invention;
FIG. 3 illustrates a vehicle equipped with the ranging camera apparatus;
FIG. 4 illustrates an arrangement of a region dividing filter relative to an imaging element according to an embodiment of the present invention;
FIG. 5 is a perspective view of a structure of a polarizer region of the region dividing filter;
FIG. 6A is a perspective view illustrating the direction of grooves of a first polarizer region of the region dividing filter;
FIG. 6B is a perspective view illustrating the direction of grooves of a second polarizer region of the region dividing filter;
FIG. 6C is a perspective view illustrating a relative arrangement of the first and the second polarizer regions of the region dividing filter;
FIG. 7 is a block diagram of a structure for realizing a real-time process for outputting three kinds of data of luminance information, polarization ratio information, and parallax information simultaneously;
FIG. 8 illustrates a flow of the real-time process for outputting the three kinds of data simultaneously;
FIG. 9A illustrates a luminance information image taken by a left camera mounted on a vehicle;
FIG. 9B illustrates a luminance information image taken by a right camera mounted on the vehicle;
FIG. 9C illustrates a parallax image obtained by performing a parallax calculation on luminance information image data;
FIG. 9D illustrates a parallax image obtained by performing a parallax calculation on polarization ratio information image data;
FIG. 10 illustrates a ranging camera apparatus according to another embodiment of the present invention;
FIG. 11 is a perspective view of a structure of a region dividing filter of the ranging camera apparatus of FIG. 10;
FIG. 12 illustrates a ranging camera apparatus according to another embodiment of the present invention;
FIG. 13A is a perspective view of the first polarizer region according to an embodiment of the present invention; and
FIG. 13B is a perspective view of the second polarizer region according to an embodiment of the present invention.

BEST MODE OF CARRYING OUT THE INVENTION

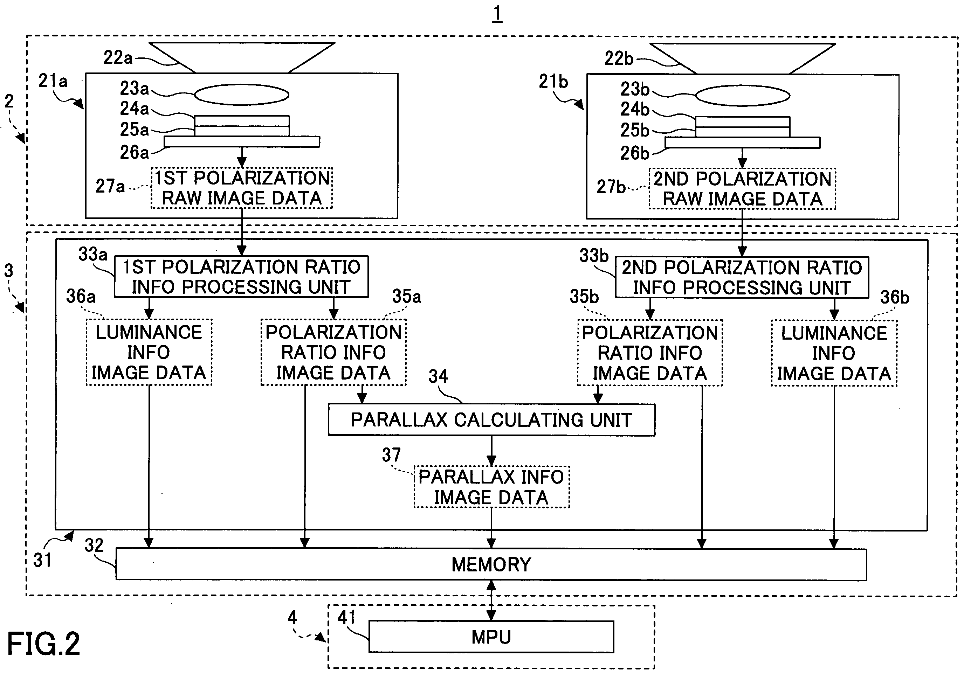

FIG. 2 illustrates a ranging camera apparatus 1 according to an embodiment of the present invention. The ranging camera apparatus 1 includes an imaging device 2, an image processor 3, and an image processing computer 4. The imaging device 2 includes a first imaging unit 21a and a second imaging unit 21b spaced apart from the first imaging unit 21a by a predetermined distance. The image processor 3 includes an operating process unit 31 and a memory 32. The image processor 3 calculates various image data by processing images taken by the first and the second imaging units 21a and 21b. The processing computer 4 includes a MPU (Micro Processing Unit) 41 which may include software for a recognizing process, a polarization ratio information control process, and a parallax calculation control process. The processing computer 4 may be configured to determine a road shape or three-dimensional positions of plural three-dimensional objects based on the image data provided by the image processor 3 at high speed, identify a car travelling ahead or an obstacle, and perform a determination process for issuing a collision alarm, for example.

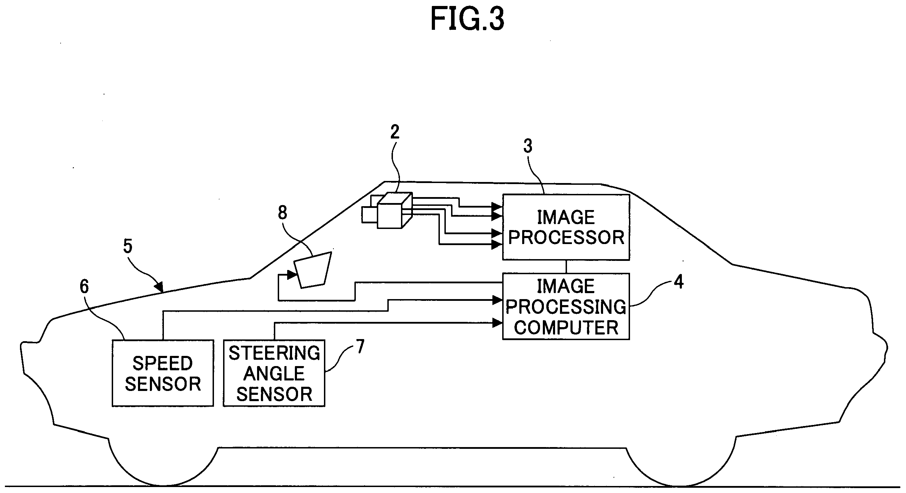

FIG. 3 illustrates a vehicle 5 equipped with the ranging camera apparatus 1 according to an embodiment of the present invention. In accordance with the present embodiment, the imaging device 2 takes an image of an object within a predetermined range outside the vehicle 5 in order to recognize and monitor the object. The image processing computer 4 is supplied with signals from a speed sensor 6 and a steering angle sensor 7 for detecting the current status of the vehicle 5. If the image processing computer 4 determines that the recognized object poses an obstacle to the vehicle 5, the image processing computer 4 may cause an alert to be displayed on a display 8 in front of the driver. Preferably, an external unit (not shown) configured to control actuators and the like (not shown) may be connected to the image processing computer 4 so that the vehicle 5 can be automatically controlled to prevent collision with the obstacle. Preferably, the imaging device 2 may be installed at a position on the vehicle 5 such that the imaging device 2 does not block the driver's view, such as behind the rearview mirror. While FIG. 3 illustrates the imaging device 2 separately disposed, the image processor 3, the image processing computer 4, and the imaging device 2 may constitute an integral unit.

Referring back to FIG. 2, the first imaging unit 21a includes a first hood portion 22a, a first lens portion 23a, a first region dividing filter 24a, and a first imaging element 25a disposed on a printed circuit board 26a. The first region dividing filter 24a includes two polarizer regions configured to transmit an S polarization component or a P polarization component, as will be described later. Thus, the first region dividing filter 24a separates light incident thereon via the first lens portion 23a into S polarization component light and P polarization component light. The S and P polarization component lights are then incident on the first imaging element 25a. In response, the first imaging element 25a outputs first polarization raw image data 27a to the operating process unit 31 of the image processor 3.

The second imaging unit 21b similarly includes a second hood portion 22b, a second lens portion 23b, a second region dividing filter 24b, and a second imaging element 25b disposed on a printed circuit board 26b. The second region dividing filter 24b includes two polarizer regions configured to transmit an S polarization component or a P polarization component of light incident on the second region dividing filter 24b via the second lens portion 23b. Thus, the second region dividing filter 24b separates the light into S polarization component light and P polarization component light. The S and P polarization component lights are then incident on the second imaging element 25b. The second imaging element 25b outputs second polarization raw image data 27b to the operating process unit 31 of the image processor 3.

The operating process unit 31 includes first and second polarization ratio information processing units 33a and 33b, and a parallax calculating unit 34. The first polarization ratio information processing unit 33a generates first polarization ratio (which may be hereafter referred to as "PR") information image data 35a by calculating a polarization ratio PR of the P polarization component and the S polarization component based on the first polarization raw image data 27a, in accordance with the following equation (2), and outputs the PR information image data 35a to the parallax calculating unit 34 and the memory 32.

$$PR=P/S \qquad (2)$$

where P is the P polarization component, and S is the S polarization component.

The PR is calculated in order to detect a characteristics difference between the acquired polarization components. Therefore, the polarization ratio PR may be calculated in accordance with any of the following equations (3) through (5):

$$PR=P-S \qquad (3)$$

$$PR=(P/S)/(P+S) \qquad (4)$$

$$PR=(P-S)/(P+S) \qquad (5)$$

Although equation (3) calculates a difference, the results of the calculations using the acquired polarization components are collectively referred to as a polarization ratio.

The denominator in equations (4) and (5) is a normalizing portion. Alternatively, normalization may be based on a difference between P and S. Although the P polarization information and the S polarization information are utilized in obtaining the polarization ratio information in the present embodiment, circular polarization components may be utilized.

The first polarization ratio information processing unit 33a generates first luminance information image data 36a by summing the P polarization component and the S polarization component in accordance with the following equation (6), and outputs the first luminance information image data 36a to the memory 32.

$$\text{Luminance information image data}=P+S \qquad (6)$$

On the other hand, the second polarization ratio information processing unit 33b generates second polarization ratio information image data 35b by calculating the polarization ratio PR based on the second polarization raw image data 27b, and outputs the second polarization ratio information image data 35b to the parallax calculating unit 34 and the memory 32. The second polarization ratio information processing unit 33b also generates second luminance information image data 36b by summing the P and S polarization components, and outputs the second luminance information image data 36b to the memory 32.

The parallax calculating unit 34, using the first and the second polarization ratio information image data 35a and 35b, calculates a total ("$R_{SAD}$") of the luminance differences in the image blocks of the images in accordance with the following equation (7), thereby obtaining a correspondence evaluation value. The correspondence evaluation value is evaluated such that the smaller the correspondence evaluation value, the higher the degree of correspondence between the blocks. The evaluation provides parallax information image data 37 that is outputted to the memory 32.

$$R_{SAD} = \sum_{j=0}^{N-1} \sum_{i=0}^{N-1} | I(i, j) - T(i, j) | \qquad (7)$$

where i and j indicate pixel positions in the blocks, and I and T indicate luminance values of left and right pixels.

Thus, the parallax calculating unit 34 determines a block centered around a pixel of interest in the first polarization ratio information image data 35a, and determines a block of the same size in the second second polarization ratio information image data 35b. The parallax calculating unit 34 then calculates a correlation value each time one block is shifted from the other by one pixel. The parallax calculating unit 34 determines the distance to the pixel at the center of the block having the greatest correlation as a parallax. This step is performed for all of the pixels (or at certain intervals of the pixels) of the first polarization ratio information image data 35a. For the calculation of the correlation value, a variety of algorithms may be used, of which equation (4) above may be the most conventional example. The method according to the present embodiment may be applied to many other parallax calculating algorithms.

The MPU 41 may be configured to perform various recognizing processes by using the parallax information image data 37, the first and the second luminance information image data 36a and 36b, the first and the second polarization ratio information image data 35a and 35b stored in the memory 32.

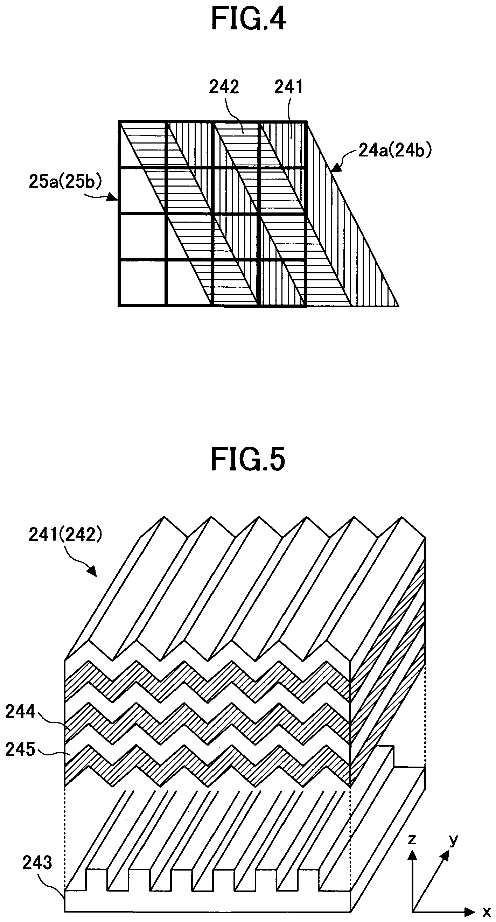

FIG. 4 illustrates the first (second) region dividing filter 24a (24b) of the first (second) imaging unit 21a (21b), showing how the filters are divided into the two portions, i.e., a first polarizer region 241 that transmits only the S polarization component light and a second polarizer region 242 that only transmits the P polarization component light. The first and the second first and the second polarizer regions 241 and 242 are divided by lines that are inclined at an angle with respect to either the vertical or lateral direction in which the first (second) imaging element 25a (25b) is arranged, where the first (second) imaging element 25a (25b) is a square arranged vertically and horizontally in a matrix. The first and the second first and the second polarizer regions 241 and 242 may have a width in the lateral direction that is equal to the width of one pixel of the first (second) imaging element 25a (25b).

The lines dividing the first and the second polarizer regions 241 and 242 may be inclined at such an angle that a change of one pixel of the first imaging element 25a (25b) in the lateral direction corresponds to a change of two pixels of the first (second) imaging element 25a (25b) in the vertical direction. Thus, the polarization ratio can be calculated without being easily affected by a position error between the first (second) imaging element 25a (25b) and the first (second) region dividing filter 24a (24b).

The first and the second polarizer regions 241 and 242 of the first and the second region dividing filters 24a and 24b may include polarizers made of photonic crystal. In the first polarizer region 241 of the first and the second region dividing filters 24a and 24b, for example, first transparent medium layers 244 having a high refractive index and second transparent medium layers 245 having a low refractive index are alternately layered on a transparent substrate 243 having periodic grooves, while a shape of the interface is preserved, as illustrated in FIG. 5. The first and the second medium layers 244 and 245 have a periodicity in an X direction perpendicular to the grooves of the transparent substrate 243. The first and the second medium layers 244 and 245 may have a uniform shape in a Y direction parallel to the grooves, or a periodic structure of greater periods in the X direction than the period of the grooves, or a non-periodic structure. Such a fine periodic structure (of photonic crystal) may be fabricated with high reproducibility and high uniformity by a self-cloning technology.

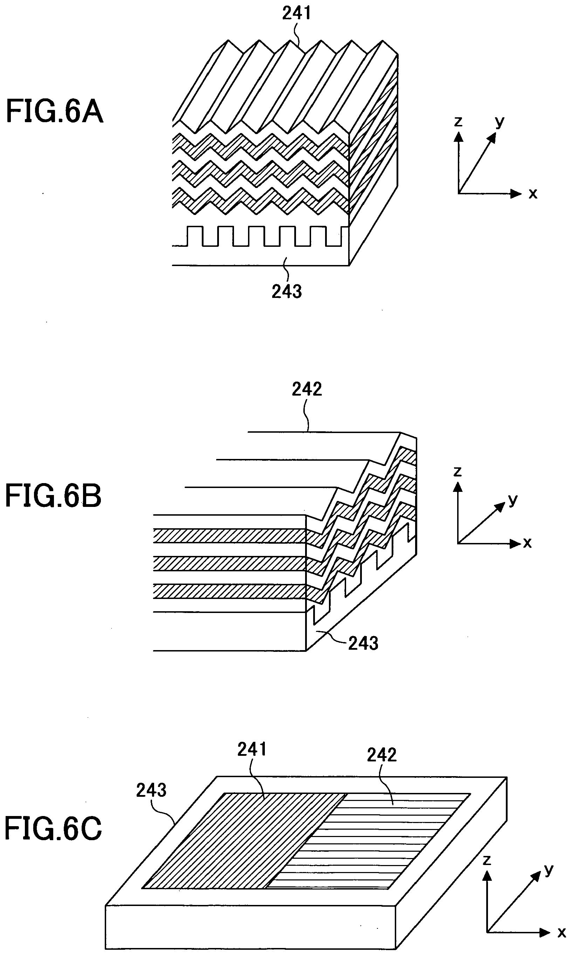

As illustrated in FIGs. 6A and 6B, the first and the second polarizer regions 241 and 242 of photonic crystal may have a multilayer structure in which two or more kinds of transparent material are alternately layered in a z axis direction on the substrate 243 parallel to an XY plane in an orthogonal coordinate system having X and Y axes perpendicular to the Z axis. The multilayer structure may include alternate layers of $Ta_2O_5$ and $SiO_2$. The layers in the first and the second polarizer regions 241 and 242 may have a concave/convex shape that is repeated in one direction in the XY plane.

In the first polarizer region 241, the direction of the grooves is parallel to the Y axis direction, as illustrated in FIG. 6A. In the second polarizer region 242, the direction of the grooves is parallel to the X axis direction as illustrated in FIG. 6B. Thus, the directions of the grooves of the first and the second polarizer regions 241 and 242 are perpendicular to each other. Thus, the first and the second polarizer regions 241 and 242 transmit polarization components having perpendicular polarization directions of the input light incident on the XY plane. The first and the second polarizer regions 241 and 242 also transmit equal amounts of non-polarization components.

While the first and the second region dividing filters 24a and 24b are provided with the two kinds of concave/convex-shaped grooves in the illustrated example, the concave/convex shaped grooves may be oriented in three or more directions. By thus forming the first and the second polarizer regions 241 and 242 with a photonic crystal, superior resistance to degradation by ultraviolet rays can be obtained, thus enabling the apparatus to be used stably for a long period of time.

An opening area and the transmission axis of the first and the second polarizer regions 241 and 242 of the first and the second region dividing filters 24a and 24b can be freely designed by controlling the size or direction of the pattern of the grooves on the transparent substrate 243. The groove pattern may be formed by various methods, such as electron beam lithography, photolithography, interference exposure, and nanoprinting. In any of the methods, the direction of grooves can be highly accurately determined in each micro region. Thus, a polarizer region in which fine polarizers having different transmission axes are combined may be formed, and a polarizer consisting of an arrangement of plural of such fine polarizers may be formed. Because only specific regions having the concave/convex pattern perform the polarizer operation, a surrounding region may be flatly formed or provided with a concave/convex pattern that is isotropic in the plane so that the surrounding region has no polarization dependency. In this case, the light is transmitted by the surrounding region, so that a polarizer can be built only within a specific region.

The first and the second region dividing filters 24a and 24b are disposed adjacently to the first and the second imaging elements 25a and 25b, respectively. Preferably, the first and the second region dividing filters 24a and 24b may be bonded to the first and the second imaging elements 25a and 25b, respectively, which are die-mounted, with a filter structure surface of the filters facing the imaging element surface side, using an adhesive or the like. Generally, light from a lens travels toward an imaging element as converging finite light. Thus, if the first and the second region dividing filters 24a and 24b and the first and the second imaging elements 25a and 25b are spaced apart respectively from one another, the light near the boundary of the first or the second region dividing filter 24a or 24b may produce crosstalk noise in each region. Such crosstalk can be prevented and the imaging device 2 can perform stably by disposing the first and the second region dividing filters 24a and 24b adjacently to the first and the second imaging elements 25a and 25b, respectively.

Much time is required for the processes of extracting the S and P polarization components from the first and the second polarization raw image data 27a and 27b, generating the first and the second polarization ratio information image data 35a and 35b according to equations (2) and (3), and generating the first and the second luminance information image data 36a and 36b according to equation (6), using the first and the second polarization ratio information processing units 33a and 33b. Much time is also required for generating the parallax information image data 37 by performing a parallax calculation on the first and the second polarization ratio information image data 35a and 35b using the parallax calculating unit 34.

As mentioned above, it is very difficult to simultaneously output the three kinds of information including the first and the second polarization ratio information image data 35a and 35b, the first and the second luminance information image data 36a and 36b, and the parallax information image data 37 by performing complicated calculations using the polarization ratio information processing units 33a and 33b and the parallax calculating unit 34.

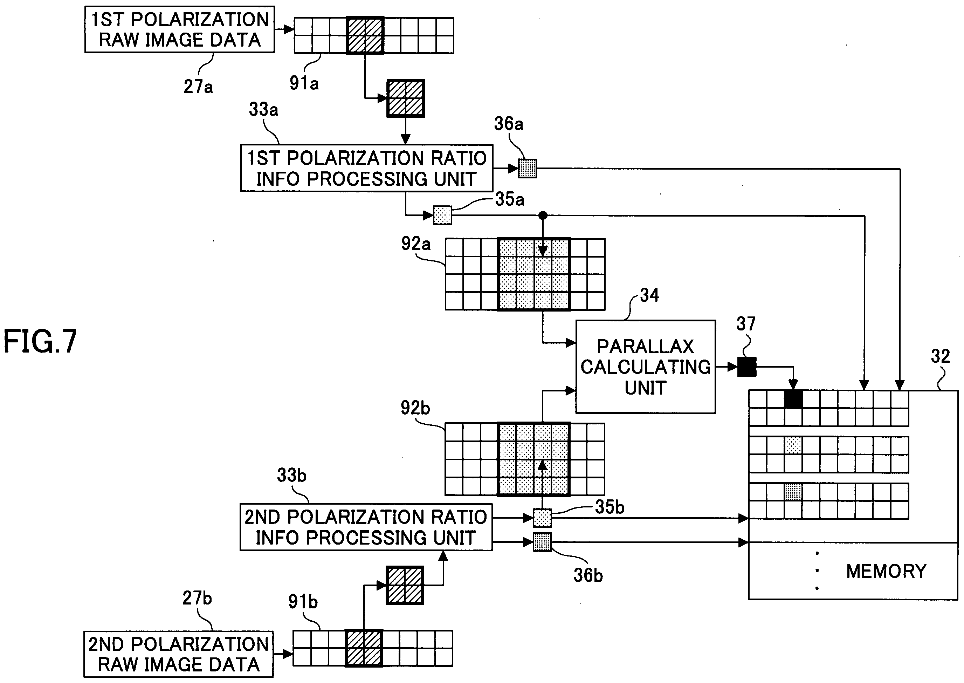

FIG. 7 illustrates a hardware structure that enables the output of the three kinds of information simultaneously. The first and the second polarization raw image data 27a and 27b outputted from the first and second imaging units 21a and 21b are stored in first and second line buffers 91a and 91b, respectively, one pixel after another. Because the first and the second polarization raw image data 27a and 27b contain different polarization components obtained by the first and the second region dividing filters 24a and 24b on a pixel by pixel basis, two or more pixels are required for calculating the polarization ratio. Thus, using the 2 pixels vertically $\times$ 2 pixels laterally of the first and the second polarization raw image data 27a and 27b stored in the first and the second line buffers 91a and 91b, respectively, the polarization ratio calculation is performed according to equations (1) and (2) by the first and the second polarization ratio information processing units 33a and 33b. The first and the second polarization ratio information image data 35a and 35b obtained by the calculation are stored in the first and the second line buffers 92a and 92b, respectively. The first and the second polarization ratio information processing units 33a and 33b also calculate the first and the second luminance information image data 36a and 36b and store them in the memory 32.

After a block of data for the parallax calculation is stored in the first and the second line buffers 92a and 92b, the parallax calculating unit 34 reads the block of data, such as four pixels vertically $\times$ four pixels laterally, and performs the parallax calculation according to equation (7), thereby generating the parallax information image data 37 which are then stored in the memory 32. Thus, a pipeline process is performed using the first and the second line buffers 91a, 91b, 92a, and 92b, so that the calculation result can be stored in the memory 32 with only several lines of delay. The above processes may be implemented by a field programmable gate array (FPGA) or an application specific IC (ASIC). Such a hardware structure enables the ranging camera apparatus 1 mounted on the vehicle 5 to process data in a real-time manner.

The pixel size used in the parallax calculation or the polarization ratio calculation may be dynamically determined. In this case, the first and the second line buffers 92a and 92b may also be configured to dynamically store the image data. When the imaging element comprises a CMOS sensor, several pixels vertically × several pixels laterally may be dynamically allocated to the buffers, instead of on a line by line basis. Such configuration may be dynamically varied depending on the imaging conditions.

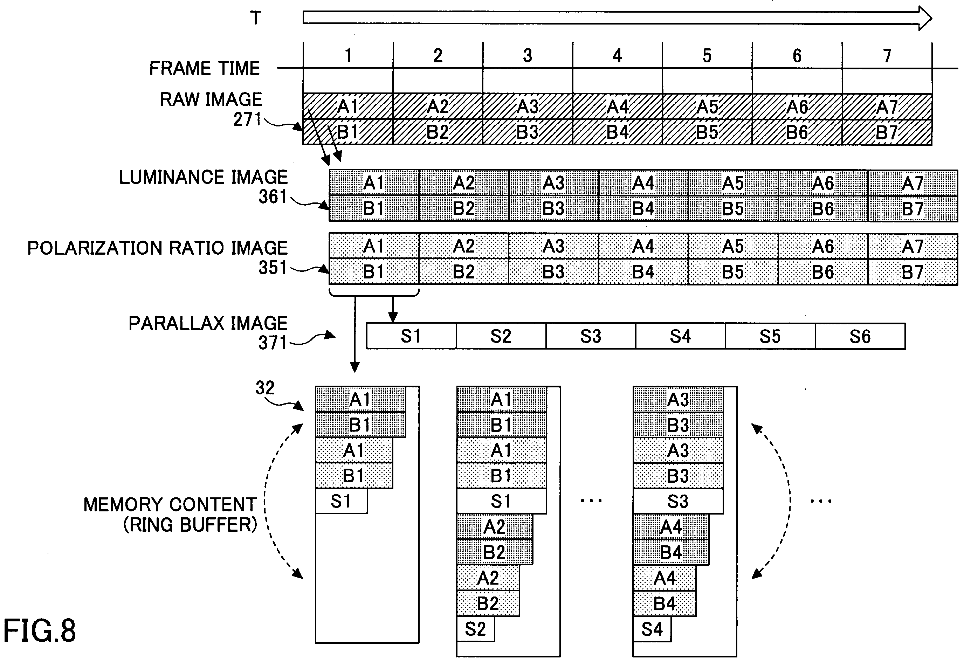

FIG. 8 illustrates a sequence of the above-described processes along a time axis T. Specifically, the raw image 271 taken by the first and the second imaging units 21a and 21b, the luminance image 361 and the polarization ratio image 351 generated by the first and the second polarization ratio information processing units 33a and 33b, and the parallax image 371 generated by the parallax calculating unit 34 are schematically illustrated along the time axis T. There is also illustrated the memory 32 in which the luminance image 361, the polarization ratio image 351, and the parallax image 371 are stored. The memory 32 may have a ring buffer structure in which the luminance image 361, the polarization ratio image 351, and the parallax image 371 are stored in a real-time manner by a pipeline method, as illustrated. An actual parallax calculation may require a distortion-compensating process. Thus, appropriate compensating logic may be implemented within the pipeline process using a line buffer.

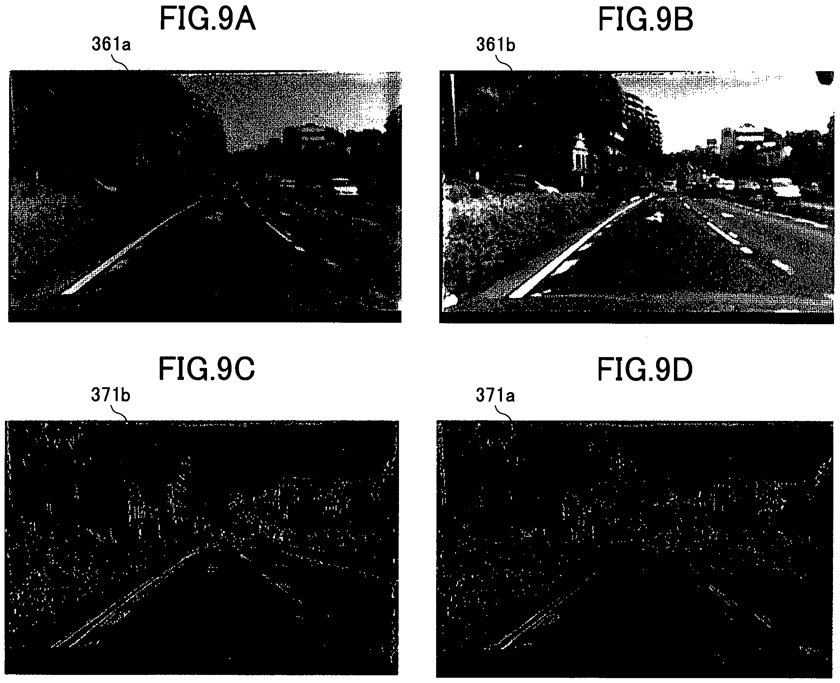

FIGs. 9A through 9D illustrate images obtained by the first and the second imaging units 21a and 21b of the ranging camera apparatus 1 mounted on the left and right sides, respectively, of the vehicle 5, before and after parallax calculation. FIG. 9A illustrates a first luminance information image 361a taken by the first imaging unit 21a, i.e., a left camera. FIG. 9B illustrates a second luminance information image 361b taken by the second imaging unit 21b, i.e., a right camera. The images of FIGs. 9A and 9B are based on the first and the second luminance information image data 36a and 36b, respectively. In these examples, because the first and the second imaging units 21a and 22b have different sensitivities, the second luminance information image 361b taken by the second imaging unit 21b is brighter than the first luminance information image 361a taken by the first imaging unit 21a.

FIG. 9C illustrates a parallax image 371b obtained by a parallax calculation by the parallax calculating unit 34 based on the first and the second luminance information image data 361a and 361b. FIG. 9D illustrates a parallax image 371a obtained by a parallax calculation by the parallax calculating unit 34 based on the first and the second polarization ratio information image data 35a and 35b calculated by the first and the second polarization ratio information processing units 33a and 33b according to equation (5). More specifically, the first and the second parallax images 371b and 371a of FIGs. 9C and 9D are the results of the parallax calculation according to equation (7) based on the same image taken by the same imaging device 2 at the same time.

In the second parallax image 371b of FIG. 9C, it can be seen that all of the left white line on the road is expressed with the same density, indicating a large error in the parallax calculation result. In order to compensate for this error, a sensitivity adjusting process needs to be performed on the first and the second imaging units 21a and 21b. However, even when an image taken under the same situation is used, in the first parallax image 371a of FIG. 9D which is obtained after the parallax calculation using the polarization ratio, the density of the left white line is changed from the near-distance to the far-distance, so that a good parallax image is obtained without requiring the sensitivity adjusting process for the first and the second imaging units 21a and 21b. Thus, the performance of the ranging camera apparatus 1 can be enhanced without increasing the cost or structural complexity of the ranging camera apparatus 1.

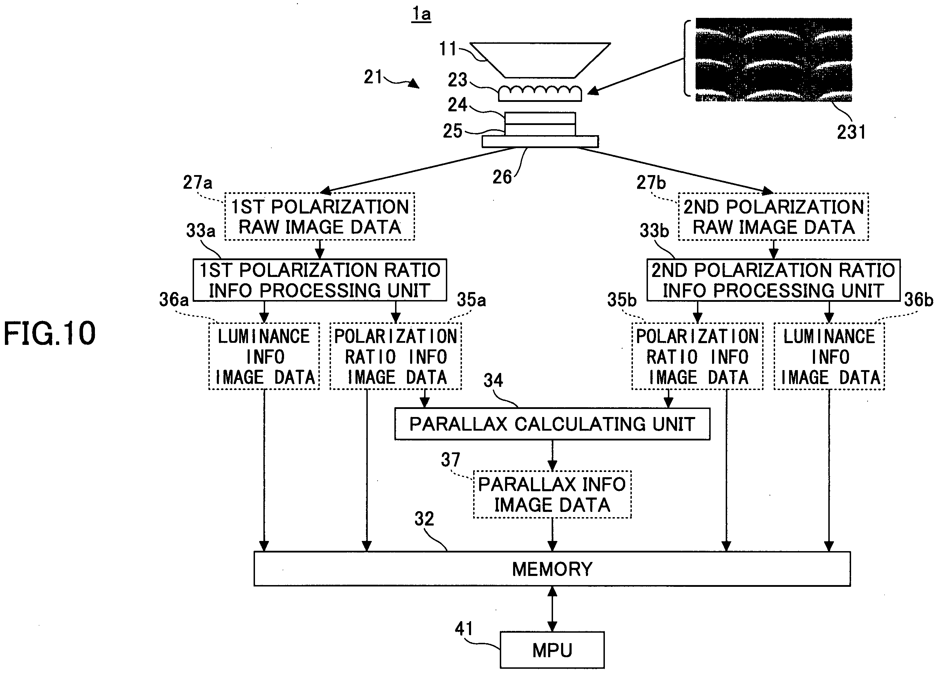

FIG. 10 illustrates a ranging camera apparatus 1a according to another embodiment of the present invention. In this embodiment, an imaging unit 21 includes a lens portion 23 in which a micro lens array 231 is used. In accordance with this embodiment, images from different viewpoints can be focused on a single imaging element 25 using the sole imaging unit 21. Thus, the ranging camera apparatus 1a can be reduced in size and cost.

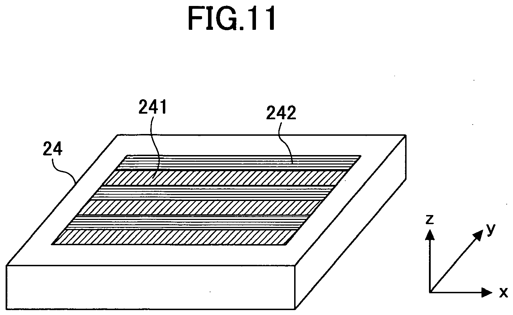

FIG. 11 illustrates a region dividing filter 24 of the imaging unit 21 of the ranging camera apparatus 1a. With respect to the direction in which the micro lens array 231 is disposed, bands of the first polarizer region 241 that only transmits the S polarization component light and the second polarizer region 242 that only transmits the P polarization component light are alternately arranged in parallel in three or more regions. Preferably, the first and the second polarizer regions 241 and 242 may be alternately arranged on a pixel by pixel basis. By thus alternately disposing the bands of the first and the second polarizer regions 241 and 242 in parallel, an interpolation process in the horizontal direction can be omitted, so that a resolution in the horizontal direction can be ensured. Further, because the bands of the first and the second polarizer regions 241 and 242 are arranged parallel to the direction in which the micro lens array 231 is disposed, a parallax image in the horizontal direction that is required for parallax detection can be accurately acquired.

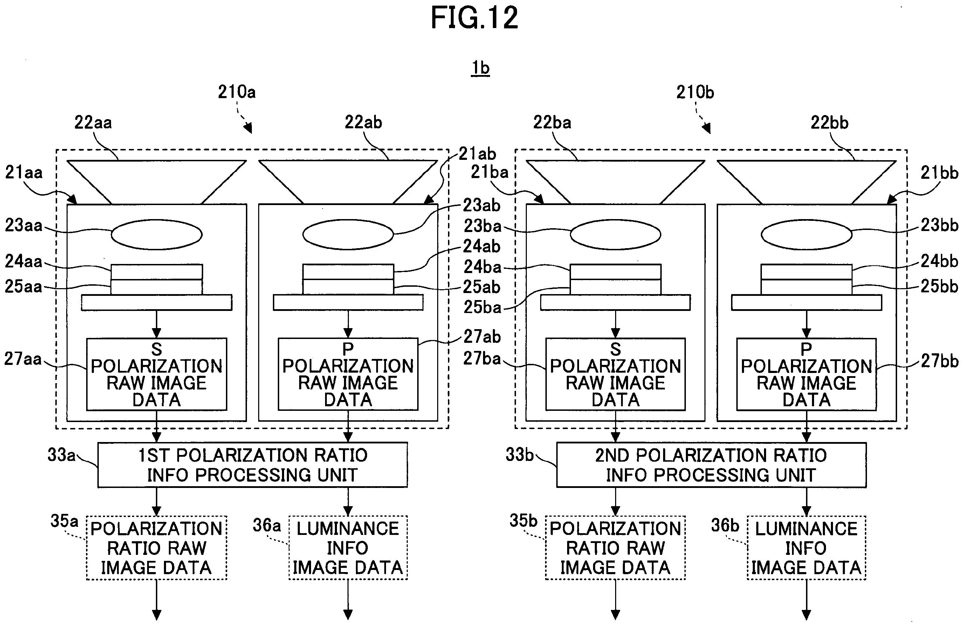

FIG. 12 illustrates a ranging camera apparatus 1b according to another embodiment of the present invention. In this embodiment, images of the S and P polarization components are obtained by separate imaging units instead of using the first and the second region dividing filters 24a and 24b of the foregoing embodiments. Specifically, the ranging camera apparatus 1b includes a left-side imaging unit 210a and a right-side imaging unit 210b. The left-side imaging unit 210a includes first and second-left imaging units 21aa and 21ab. The first-left imaging unit 21aa includes a first-left polarizing element 24aa having a first polarizer region 241 configured to only transmit the S polarization component light. The second-left imaging unit 21ab includes a second-left polarizing element 24ab having a second polarizer region 242 configured to only transmit the P polarization component light. The right-side imaging unit 210b includes a first-right imaging unit 21ba and a second-right imaging unit 21bb. The first-right imaging unit 21ba includes a first-right polarizing element 24ba having a first polarizer region 241 configured to only transmit the S polarization component light. The second-right imaging unit 21bb includes a second-right polarizing element 24bb having a second polarizer region 242 configured to only transmit the P polarization component light.

The ranging camera apparatus 1b eliminates the need for taking into consideration a geometric positioning error and the like of the polarizing element and an improved resolution of an image can be obtained, although the ranging camera apparatus 1b may cost more than the ranging camera apparatus 1 or 1a.

Preferably, the number of the left- and right-side imaging units 210a and 210b of the ranging camera apparatus 1b may be increased in order to acquire finer polarization components or perform a stereoscopic parallax calculation.

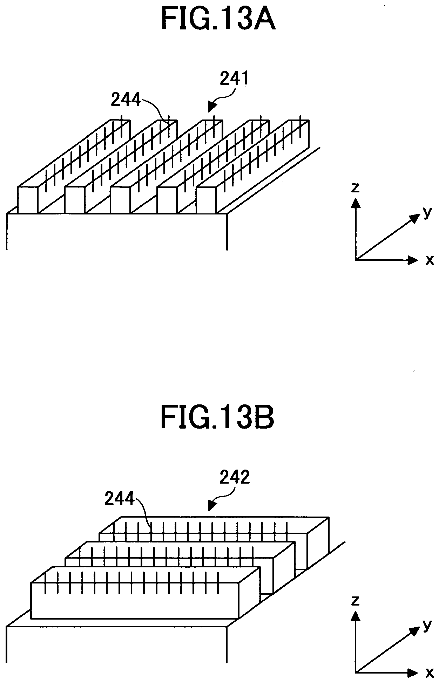

FIGs. 13A and 13B illustrate examples of wire-grid type polarizers in which the first and the second polarizers 241 and 242 are formed by arranging pieces of a thin metal wire 244 periodically. Such a structure of the polarizers may be often employed for millimeter regions of an electromagnetic wave. In the illustrated examples of the wire grid polarizer, the pieces of the metal wire 244 sufficiently thinner than the wavelength of the input light are arranged at intervals sufficiently shorter than the wavelength of the input light. When light is incident on the polarizer of such a structure, it is known that a polarization parallel to the direction in which the pieces of the metal wire 244 are arranged is reflected, while a polarization perpendicular to the direction in which the pieces of the metal wire 244 are arranged is transmitted. The direction of the metal wire 244 can be varied independently from one region to another on the same substrate, so that the characteristics of the wire grid polarizer can be varied on a region by region basis. By taking advantage of such a feature, the direction of the transmission axis may be varied from one region to another.

In one method of preparing the wire grid, a metal film may be formed on a substrate, and then the metal film may be patterned by lithography in order to leave thin lines of metal. In another method, grooves may be formed in the substrate by lithography, and then a film of metal may be formed by performing vacuum vapor deposition from a direction perpendicular to the direction of the grooves and inclined from the normal to the substrate (i.e., from a direction inclined with respect to the substrate surface). In the case of vacuum vapor deposition, particles emitted by a source of vapor deposition travel from the source to the substrate along a straight line while hardly colliding with the other molecules or atoms. Thus, the film can be formed only on the convex portions of the grooves, while hardly any film is formed on the bottom (concave) portions of the grooves as the particles are blocked by the convex portions. Thus, by controlling the amount of film formed, a metal film can be only formed on the convex portions of the grooves on the substrate.

Preferably, the metal wire of the wire grid type polarizer may comprise aluminum or silver. Other metals, such as tungsten, may also be used and the same phenomenon may be realized. Lithography may include optical lithography, electron beam lithography, and X-ray lithography. Preferably, electron beam lithography or X-ray lithography may be used given the intervals of the thin lines on the order of 100 nm for an operation with visible light. While vacuum deposition may be preferably used for forming the film of metal, sputtering in a high-vacuum atmosphere or collimation sputtering using a collimator may be performed given the relative importance of directionality of the particles incident on the substrate. Because the wire grid type polarizer can be produced by a semiconductor process as in the case of the polarizer using a photonic crystal, a boundary of two regions, for example, can be accurately produced.

Although this invention has been described in detail with reference to certain embodiments, variations and modifications exist within the scope of the invention as described and defined in the following claims.

The present application is based on Japanese Priority Application No. 2009-239946 filed October 19, 2009.

### Claims

1. A ranging camera apparatus comprising:

    an imaging device (2) comprising a first imaging unit (21a, 210a) and a second imaging unit (21b, 210b) spaced apart from the first imaging unit (21a, 210a) by a predetermined distance, each of the imaging units being configured to produce a polarization image by imaging a subject, **characterized in that** each of the polarization images contains polarization information that indicates differences between two polarization states of light received from the subject; and **in that** it further comprises:

    a processing unit (3) configured to perform parallax calculation using the polarization information in the polarization images.

2. A ranging camera apparatus according to claim 1, wherein:

    the imaging device (2) is configured to output a first polarization image data (27a) and second polarization image data (27b); and the processing unit comprises:

an operating process unit (31) to which the first and the second polarization image data are fed;
a memory (32) connected to the operating process unit; and
an image processing unit (4) connected to the memory,
wherein the operating process unit includes first and second polarization ratio information processing units (33a, 33b) and a parallax calculating unit (34),
the first polarization ratio information processing unit (33a) being configured to receive the first polarization image data from the imaging device and configured to calculate first polarization ratio information image data (35a) and first luminance information image data (36a),
the second polarization ratio information processing unit (33b) being configured to receive the second polarization image data from the imaging device and configured to calculate second polarization ratio information image data (35b) and second luminance information image data (36b),
wherein the parallax calculating unit is configured to receive the first and the second polarization ratio information image data and configured to generate parallax information image data (37),
wherein the memory is configured to store the first and the second polarization ratio information image data and the first and the second luminance information image data from the first and the second polarization ratio information processing units, and the parallax information image data from the parallax calculating unit,
wherein the image processing unit (4) is configured to recognize the subject based on the first and the second polarization ratio information image data, the first and the second luminance information image data, and the parallax information image data stored in the memory, and configured to calculate a three-dimensional position of the subject based on the parallax information image data.

3. The ranging camera apparatus according to claim 2, wherein the operating process unit (3) is configured to output the first and the second polarization ratio information image data and the first and the second luminance information image data, and the parallax information image data simultaneously.

4. The ranging camera apparatus according to claim 2, wherein the first and the second polarization ratio information processing units calculate the first and the second polarization ratio information image data, respectively, by utilizing a ratio of different polarization states recorded in each of the first and the second polarization image data, respectively.

5. The ranging camera apparatus according to claim 2, wherein the first and the second polarization ratio information processing units calculate the first and the second polarization ratio information image data, respectively, by utilizing a difference of different polarization states recorded in each of the first and the second polarization image data, respectively.

6. The ranging camera apparatus according to claim 2, wherein the first and the second polarization ratio information processing units calculate the first and the second polarization ratio information image data, respectively, by utilizing information obtained by normalizing a polarization ratio of different polarization states recorded in each of the first and the second polarization image data, respectively.

7. The ranging camera apparatus according to claim 2, wherein the first and the second polarization ratio information processing units calculate the first and the second polarization ratio information image data, respectively, by utilizing information obtained by normalizing a difference of different polarization states recorded in each of the first and the second polarization image data, respectively.

8. The ranging camera apparatus according to any one of claims 2 to 7, wherein the imaging device acquires the first and the second polarization image data on a pixel by pixel basis.

9. The ranging camera apparatus according to any one of claims 2 to 8, wherein the imaging device acquires the first and the second polarization image data in each of plural of areas in an image.

10. A vehicle including a ranging camera apparatus according to any one of the preceding claims.

**Patentansprüche**

1. Entfernungsmessende Kameravorrichtung, umfassend:

eine bildgebende Vorrichtung (2), die eine erste bildgebende Einheit (21a, 210a) und eine zweite bildgebende Einheit (21b, 210b), die sich in einem vorbestimmten Abstand von der ersten bildgebenden Einheit (21a, 210a) befindet, umfasst, wobei jede der bildgebenden Einheiten konfiguriert ist, ein Polarisationsbild zu produzieren durch Abbilden eines Subjekts, **dadurch gekennzeichnet, dass** jedes der Polarisationsbilder Polarisationsinformationen enthält, die Unterschiede zwischen zwei Polarisationszuständen von Licht, das von dem Subjekt empfangen wird, aufzeigen; und dadurch, dass sie ferner Folgendes umfasst:

eine Verarbeitungseinheit (3), die konfiguriert ist, Parallaxenberechnung unter Verwendung der Polarisationsinformationen in den Polarisationsbildern durchzuführen.

2. Entfernungsmessende Kameravorrichtung nach Anspruch 1, wobei:

die bildgebende Vorrichtung (2) konfiguriert ist, erste Polarisationsbilddaten (27a) und zweite Polarisationsbilddaten (27b) auszugeben; und die Verarbeitungseinheit Folgendes umfasst:

eine ausführende Prozesseinheit (31), in die die ersten und zweiten Polarisationsbilddaten gespeist werden; einen Speicher (32), der mit der ausführenden Prozesseinheit verbunden ist; und eine Bildverarbeitungseinheit (4), die mit dem Speicher verbunden ist, wobei die ausführende Prozesseinheit erste und zweite Polarisationsverhältnisinformationsverarbeitungseinheiten (33a, 33b) und eine Parallaxenberechnungseinheit (34) enthält, wobei die erste Polarisationsverhältnisinformationsverarbeitungseinheit (33a) konfiguriert ist, die ersten Polarisationsbilddaten von der bildgebenden Vorrichtung zu empfangen und erste Polarisationsverhältnisinformationsbilddaten (35a) und erste Leuchtdichteinformationsbilddaten (36a) zu berechnen, und wobei die zweite Polarisationsverhältnisinformationsverarbeitungseinheit (33b) konfiguriert ist, die zweiten Polarisationsbilddaten von der bildgebenden Vorrichtung zu empfangen und zweite Polarisationsverhältnisinformationsbilddaten (35b) und zweite Leuchtdichteinformationsbilddaten (36b) zu berechnen, wobei die Parallaxenberechnungseinheit konfiguriert ist, die ersten und zweiten Polarisationsverhältnisinformationsbilddaten zu empfangen und Parallaxeninformationsbilddaten (37) zu generieren, wobei der Speicher konfiguriert ist, die ersten und zweiten Polarisationsverhältnisinformationsbilddaten und die ersten und zweiten Leuchtdichteinformationsbilddaten von den ersten und zweiten Polarisationsverhältnisinformationsverarbeitungseinheiten und die Parallaxeninformationsbilddaten von der Parallaxenberechnungseinheit zu speichern, wobei die Bildverarbeitungseinheit (4) konfiguriert ist, das Subjekt basierend auf den ersten und zweiten Polarisationsverhältnisinformationsbilddaten, den ersten und zweiten Leuchtdichteinformationsbilddaten und den Parallaxeninformationsbilddaten, die in dem Speicher gespeichert sind, zu erkennen und eine dreidimensionale Position des Subjekts basierend auf den Parallaxeninformationsbilddaten zu berechnen.

3. Entfernungsmessende Kameravorrichtung nach Anspruch 2, wobei die ausführende Prozesseinheit (3) konfiguriert ist, die ersten und zweiten Polarisationsverhältnisinformationsbilddaten und die ersten und zweiten Leuchtdichteinformationsbilddaten sowie die Parallaxeninformationsbilddaten gleichzeitig auszugeben.

4. Entfernungsmessende Kameravorrichtung nach Anspruch 2, wobei die ersten und zweiten Polarisationsverhältnisinformationsverarbeitungseinheiten die ersten beziehungsweise zweiten Polarisationsverhältnisinformationsbilddaten unter Verwendung eines Verhältnisses von verschiedenen Polarisationszuständen, die jeweils in den ersten beziehungsweise zweiten Polarisationsbilddaten aufgezeichnet wurden, berechnen.

5. Entfernungsmessende Kameravorrichtung nach Anspruch 2, wobei die ersten und zweiten Polarisationsverhältnisinformationsverarbeitungseinheiten die ersten beziehungsweise zweiten Polarisationsverhältnisinformationsbilddaten unter Verwendung einer Differenz von verschiedenen Polarisationszuständen, die jeweils in den ersten beziehungsweise zweiten Polarisationsbilddaten aufgezeichnet wurden, berechnen.

6. Entfernungsmessende Kameravorrichtung nach Anspruch 2, wobei die ersten und zweiten Polarisationsverhältnisinformationsverarbeitungseinheiten die ersten beziehungsweise zweiten Polarisationsverhältnisinformationsbilddaten unter Verwendung von Informationen, die durch Normalisierung eines Polarisationsverhältnisses von unterschiedlichen Polarisationszuständen, die jeweils in den ersten beziehungsweise zweiten Polarisationsbilddaten aufgezeichnet wurden, berechnen.

7. Entfernungsmessende Kameravorrichtung nach Anspruch 2, wobei die ersten und zweiten Polarisationsverhältnisinformationsverarbeitungseinheiten die ersten beziehungsweise zweiten Polarisationsverhältnisinformationsbilddaten unter Verwendung von Informationen, die durch Normalisierung einer Differenz von unterschiedlichen Polarisationszuständen, die in jeweils in den ersten beziehungsweise zweiten Polarisationsbilddaten aufgezeichnet wurden, berechnen.

**8.** Entfernungsmessende Kameravorrichtung nach einem der Ansprüche 2 bis 7, wobei die bildgebende Vorrichtung die ersten und zweiten Polarisationsbilddaten auf einer Pixelfür-Pixel-Basis erfasst.

**9.** Entfernungsmessende Kameravorrichtung nach einem der Ansprüche 2 bis 8, wobei die bildgebende Vorrichtung die ersten und zweiten Polarisationsbilddaten in jedem von mehreren Bereichen in einem Bild erfasst.

**10.** Fahrzeug einschließlich einer entfernungsmessenden Kameravorrichtung nach einem der vorangehenden Ansprüche.

**Revendications**

**1.** Appareil photographique de télémétrie comprenant :

un dispositif d'imagerie (2) comprenant une première unité d'imagerie (21a, 210a) et une deuxième unité d'imagerie (21b, 210b) espacée de la première unité d'imagerie (21a, 210a) selon un écart prédéterminé, chacune des unités d'imagerie étant conçue pour produire une image en polarisation par prise d'image d'un sujet, **caractérisé en ce que** chacune des images en polarisation comprend des informations sur la polarisation qui indiquent des différences entre deux états de polarisation de la lumière reçue en provenance du sujet, et **en ce qu'**il comprend en outre :

une unité de traitement (3) conçue pour réaliser un calcul de parallaxe au moyen d'informations sur la polarisation des images en polarisation.

**2.** Appareil photographique de télémétrie selon la revendication 1, dans lequel :

le dispositif d'imagerie (2) est conçu pour émettre des premières données d'image en polarisation (27a) et des deuxièmes données d'image en polarisation (27b) ; et l'unité de traitement comprend :

une unité de traitement d'exploitation (31) à laquelle les premières et deuxièmes données d'image en polarisation sont transmises,
une mémoire (32) connectée à l'unité de traitement d'exploitation, et
une unité de traitement de l'image (4) connectée à la mémoire ;
l'unité de traitement d'exploitation comprenant des première et deuxième unités de traitement de l'information sur le rapport de polarisation (33a, 33b) et une unité de calcul de parallaxe (34),
la première unité de traitement de l'information sur le rapport de polarisation (33a) étant conçue pour recevoir les premières données d'image en polarisation provenant du dispositif d'imagerie, et conçue pour calculer des premières données d'image d'information sur le rapport de polarisation (35a) et des premières données d'image d'information sur la luminance (36a),
la deuxième unité de traitement de l'information sur le rapport de polarisation (33b) étant conçue pour recevoir les deuxièmes données d'image en polarisation provenant du dispositif d'imagerie, et conçue pour calculer des deuxièmes données d'image d'information sur le rapport de polarisation (35b) et des deuxièmes données d'image d'information sur la luminance (36b),
l'unité de calcul de parallaxe étant conçue pour recevoir les premières et deuxièmes données d'image d'information sur le rapport de polarisation, et conçue pour générer des données d'image d'information sur le parallaxe (37),
la mémoire étant conçue pour stocker les premières et deuxièmes données d'image d'information sur le rapport de polarisation et les premières et deuxièmes données d'image d'information sur la luminance provenant des première et deuxième unités de traitement de l'information sur le rapport de polarisation, et les données d'image d'information sur le parallaxe provenant de l'unité de calcul de parallaxe,
l'unité de traitement de l'image (4) étant conçue pour reconnaître le sujet en fonction des premières et deuxièmes données d'image d'information sur le rapport de polarisation, des premières et deuxièmes données d'image d'information sur la luminance, et des données d'image d'information sur le parallaxe stockées dans la mémoire, et conçue pour calculer une position tridimensionnelle du sujet en fonction des données d'image d'information de parallaxe.

3. Appareil photographique de télémétrie selon la revendication 2, dans lequel l'unité de traitement d'exploitation (3) est conçue pour émettre simultanément les premières et deuxièmes données d'image d'information sur le rapport de polarisation et les premières et deuxièmes données d'image d'information sur la luminance, ainsi que les données d'image d'information sur le parallaxe.

4. Appareil photographique de télémétrie selon la revendication 2, dans lequel les première et deuxième unités de traitement de l'information sur le rapport de polarisation calculent respectivement les premières et deuxièmes données d'image d'information sur le rapport de polarisation, en utilisant respectivement un rapport existant entre différents états de polarisation enregistrés dans chacune des premières et deuxièmes données d'image en polarisation.

5. Appareil photographique de télémétrie selon la revendication 2, dans lequel les première et deuxième unités de traitement de l'information sur le rapport de polarisation calculent respectivement les premières et deuxièmes données d'image d'information sur le rapport de polarisation, en utilisant respectivement une différence existant entre les différents états de polarisation enregistrés dans chacune des premières et deuxièmes données d'image en polarisation.

6. Appareil photographique de télémétrie selon la revendication 2, dans lequel les premières et deuxièmes unités de traitement de l'information sur le rapport de polarisation calculent respectivement les premières et deuxièmes données d'image d'information sur le rapport de polarisation, en utilisant respectivement des informations obtenues par la normalisation d'un rapport de polarisation des différents états de polarisation enregistrés dans chacune des premières et deuxièmes données d'image en polarisation.

7. Appareil photographique de télémétrie selon la revendication 2, dans lequel les premières et deuxièmes unités de traitement de l'information sur le rapport de polarisation calculent respectivement les premières et deuxièmes données d'image d'information sur le rapport de polarisation, en utilisant respectivement des informations obtenues par la normalisation d'une différence entre les différents états de polarisation enregistrés dans chacune des premières et deuxièmes données d'image en polarisation.

8. Appareil photographique de télémétrie selon l'une quelconque des revendications 2 à 7, dans lequel le dispositif d'imagerie acquiert les premières et deuxièmes données d'image en polarisation pixel par pixel.

9. Appareil photographique de télémétrie selon l'une quelconque des revendications 2 à 8, dans lequel le dispositif d'imagerie acquiert les premières et deuxièmes données d'image en polarisation dans chacune des multiples zones d'une image.

10. Véhicule comprenant un appareil photographique de télémétrie selon l'une quelconque des revendications précédentes.

# FIG.1

$$Z = \frac{B \times f}{d}$$

EP 2 491 340 B1

FIG.2

# FIG.3

EP 2 491 340 B1

# FIG.4

# FIG.5

**FIG.6A**

241

243

**FIG.6B**

242

243

**FIG.6C**

241 242

243

FIG.7

EP 2 491 340 B1

**FIG.8**

T

FRAME TIME — 1 2 3 4 5 6 7

RAW IMAGE 271

| A1 | A2 | A3 | A4 | A5 | A6 | A7 |
| B1 | B2 | B3 | B4 | B5 | B6 | B7 |

LUMINANCE IMAGE 361

| A1 | A2 | A3 | A4 | A5 | A6 | A7 |
| B1 | B2 | B3 | B4 | B5 | B6 | B7 |

POLARIZATION RATIO IMAGE 351

| A1 | A2 | A3 | A4 | A5 | A6 | A7 |
| B1 | B2 | B3 | B4 | B5 | B6 | B7 |

PARALLAX IMAGE 371

| S1 | S2 | S3 | S4 | S5 | S6 |

32

MEMORY CONTENT (RING BUFFER)

A1 B1 A1 B1 S1

A1 B1 A1 B1 S1 A2 B2 A2 B2 S2

...

A3 B3 A3 B3 S3 A4 B4 A4 B4 S4

...

# FIG.9A

361a

# FIG.9B

361b

# FIG.9C

371b

# FIG.9D

371a

FIG.10

EP 2 491 340 B1

EP 2 491 340 B1

# FIG.11

# FIG.12

**1b**

210a

22aa  22ab

21aa  21ab
21ba

23aa  23ab
23ba

24aa  24ab
24ba

25aa  25ab
25ba

| S POLARIZATION RAW IMAGE DATA | P POLARIZATION RAW IMAGE DATA |
|---|---|

27aa  27ab

210b

22ba  22bb

21bb

23bb

24bb

25bb

| S POLARIZATION RAW IMAGE DATA | P POLARIZATION RAW IMAGE DATA |
|---|---|

27ba  27bb

33a — 1ST POLARIZATION RATIO INFO PROCESSING UNIT

33b — 2ND POLARIZATION RATIO INFO PROCESSING UNIT

35a POLARIZATION RATIO RAW IMAGE DATA

36a LUMINANCE INFO IMAGE DATA

35b POLARIZATION RATIO RAW IMAGE DATA

36b LUMINANCE INFO IMAGE DATA

EP 2 491 340 B1

# FIG.13A

# FIG.13B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5265547 A
- JP 2008122217 A
- JP 10335758 A
- EP 2252227 A2
- JP 2009239946 A